# EUROPEAN PATENT SPECIFICATION

(11) **EP 1 187 395 B1**
(45) Date of publication and mention of the grant of the patent: **10.11.2004**
(21) Application number: 01307587.4
(22) Date of filing: 06.09.2001
(51) Int. Cl.: H04L 12/24, H04L 29/14

(54) **Method of controlling a fault-tolerant information transmission network system**
Verfahren zur Steuerung eines fehlertoleranten Informationsübertragungs-Netzwerksystems
Méthode pour contrôler un système de réseau de transmission de l'information tolérant aux fautes

(30) Priority: 06.09.2000 JP 2000270475; 31.08.2001 JP 2001263852
(43) Date of publication of application: 13.03.2002
(73) Proprietor: Kabushiki Kaisha Toshiba, Tokyo (JP)
(72) Inventor: Nakano, Toru, c/o Intellectual Property Division, Minato-ku, Tokyo 105-8001 (JP); Hatada, Keiko, c/o Intellectual Property Division, Minato-ku, Tokyo 105-8001 (JP)
(74) Representative: Shindler, Nigel

(56) References cited:
- US-A- 5 448 724
- US-A- 5 920 691
- STALLINGS W: "SNMP AND SNMPV2: THE INFRASTRUCTURE FOR NETWORK MANAGEMENT" IEEE COMMUNICATIONS MAGAZINE, IEEE SERVICE CENTER. PISCATAWAY, N.J, US, vol. 36, no. 3, 1 March 1998 (1998-03-01), pages 37-43, XP000751844 ISSN: 0163-6804
- SHIBAGAKI T ET AL: "Network protection system for TAT-12/13 subsea cable network" , IEE COLLOQUIUM ON TRANSOCEANIC CABLE COMMUNICATIONS - TAT 12 AND 13 HERALD A NEW ERA (REF. NO.1996/067), IEE COLLOQUIUM ON TRANSOCEANIC CABLE COMMUNICATIONS - TAT 12 AND 13 HERALD A NEW ERA, LODON, UK, 25 MARCH 1996 , 1996, LONDON, UK, IEE, UK, PAGE(S) 4/1 - 4 XP002216734 * figure 1 *

## Description

This invention relates to a method of controlling an information transmission network system complying with, for example, the SDH (Synchronous Digital Hierarchy).

In a large-scale information transmission network system, such as a submarine optical cable system, the supervisory control functions of the system are arranged hierarchically to perform supervisory control of the network rationally. Specifically, in the system, there are provided NME (Network Management Equipment) which performs supervisory control of the entire network and SSE (System Supervisory Equipment) which performs supervisory control of a smaller range than that of the NME. For instance, in a case where a network is constructed between stations, each including nodes, SSE, which is provided for each station, performs supervisory control of the nodes in its station.

The SSE is connected to the nodes in the station and receives notifications from the individual nodes. The NME receives notifications from the individual nodes via the SSE. The information communication between the NME and each node takes the route through the SSE.

US-A-5 448 724 (HAYASHI YOKO) 5 September 1995 discloses a data processing system which is provided with a manager and an agent, wherein the information in the agent can be supervised without an increase of traffic on network.

The object of the present invention is to provide a method of controlling an information transmission network system which will never impair the supervisory control function even if a fault occurs in SSE.

Accordingly, the present invention provides a method of controlling an information transmission network system comprising a network of stations (ST-1 to ST-m) each including node units (111 to 1mn) connected to said network, and first network management equipment (21 to 2m) connected to the node units belonging to the same station, said network being also provided with second network management equipment (31 to 3m) for performing supervisory control of the node units and information communication with the node units by way of said first network management equipment, and said method includes a fault sensing step (ST41) of sensing the occurrence of a fault in said first network management equipment of one station, characterised by comprising:
a step (ST72) in which the second network management equipment of a faulty station that has sensed said fault, gives a detouring process start instruction to the first network management equipment of one other station,
a step (ST73) in which the first network management equipment of said one other station that has received said detouring process start instruction acquires configuration information about the node units of the faulty station,
a step (ST74) in which the first network management equipment of said one other station acquires summary information about the node units of the faulty station,
a step (ST75) in which the first network management equipment of said one other station sets the addressee of the notification sent from the node units of the faulty station to be itself, and
a Log accumulating step (ST81) of accumulating the notifications sent from said node units as Logs in said first network management equipment.

With the aforementioned provision, an NME that cannot communicate with an SSE to which the NME is to be connected by default gives a detouring process start instruction to the SSE of one other station (e.g., an adjacent station). In response to this, the SSE of the one other station acquires the configuration information and summary information from the nodes in the station to which the faulty SSE belongs (hereinafter, referred to as the faulty station). Then, the addressee of the notification sent from the nodes is changed from the SSE of the faulty station to the SSE of the one other station in rewriting.

As a result, the information necessary for the SSE of the one other station to take over supervisory control of the nodes in the faulty station is acquired, which enables information communication between the NME of the faulty station and the nodes via the SSE. That is, the information communication route between the NME and the nodes is caused to make a detour passing through the SSE of the one other station. This prevents communication between the NME and the nodes from being cut off, which eliminates the danger of impairing the supervisory control function.

The invention can be more fully understood from the following detailed description when taken in conjunction with the accompanying drawings, in which:
FIG. 1 is a diagram showing the configuration of an information transmission network system according to a first embodiment of the present invention;
FIG. 2 is a block diagram showing the configuration of SSE related to the present invention;
FIG. 3 is a block diagram showing the configuration of NME related to the present invention;
FIG. 4 is a sequence diagram to help explain a health check sequence in the first embodiment;
FIG. 5 shows an access route for going around the SSE in which a fault has occurred;
FIG. 6 is a sequence diagram to help explain a health check sequence in which the SSE checks its own state;
FIG. 7 is a sequence diagram to help explain the sequence of a detouring process when a fault has occurred in the SSE;
FIG. 8 is a sequence diagram to help explain a Log accumulating process during the detouring process;
FIG. 9 is a sequence diagram to help explain the sequence of a revertive switching process;
FIG. 10 is a sequence diagram to help explain the sequence of a DB synchronizing process; and
FIG. 11 is a diagram showing the configuration of an information transmission network system according to a second embodiment of the present invention.

Hereinafter, referring to the accompanying drawings, embodiments of the present invention will be explained in detail. In the embodiments below, explanation will be given on the assumption that a system complying with the SDH is used.

### (First Embodiment)

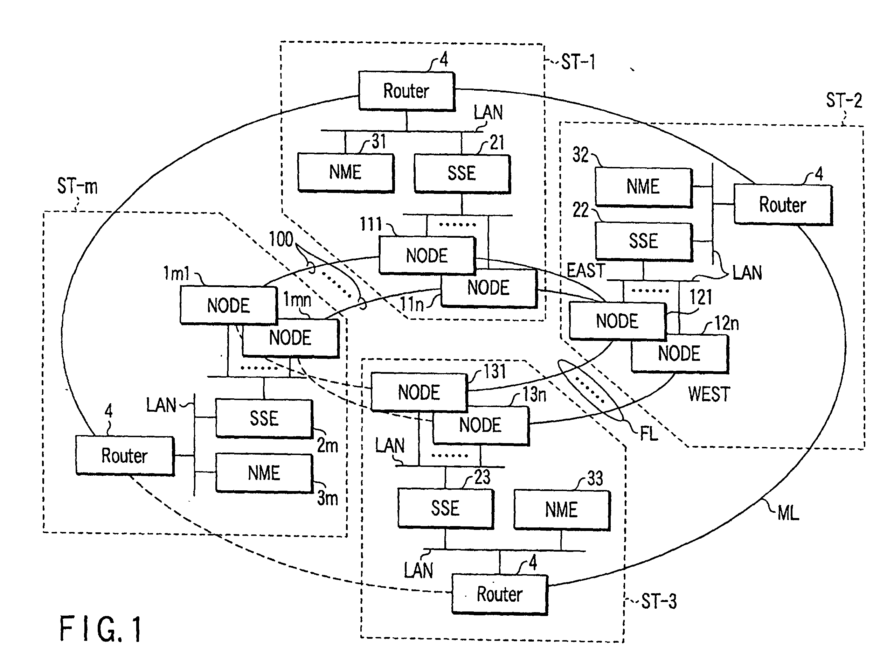

FIG. 1 is a diagram showing the configuration of an information transmission network system according to a first embodiment of the present invention. This system includes a plurality of stations ST-1 to ST-m. In each of the stations ST-1 to ST-m, there are provided a plurality of nodes (NODEs) 111 to 11n, 121 to 12n, ..., 1m1 to 1mn.

The nodes 111 to 1m1, 112 to 1m2, ..., 11n to 1mn are connected to each other in a ring by means of a communication line 100 laid over stations. As a result, an number n of ring networks exist. The ring networks include an number m of nodes 111 to 1m1, 112 to 1m2, ..., 11n to 1mn, respectively.

The communication line 100 transmits a synchronizing multiple signal, such as an STM-64 (Synchronous Transfer Module-level 64: equivalent to 10 Gbps) signal. The communication line 100 transmits an optical signal of a different wavelength to each of the ring networks. A wavelength multiplex line FL transmits a wavelength multiple light obtained by multiplexing the optical signals of the individual wavelengths.

Each of the stations ST-1 to ST-m includes in-station System Supervisory Equipment (SSE) 21 to 2m. Each of SSE 21 to SSE 2m is connected to the nodes 111 to 11n, 121 to 12n, ..., 1m1 to 1mn belonging to the corresponding stations, via the respective LANs. Each of SSE 21 to SSE 2m performs supervisory control of the node belonging to the same station.

In the stations ST-1 to ST-m, pieces of network management equipment (NME) 31 to 3m are provided respectively. NME 31 to NME 3m are connected to the nodes via SSE21 to SSE2m in the corresponding stations, respectively. That is, NME 31 to NME 3m are connected to the individual nodes by way of SSE 21 to SSE 2m, respectively. Each of NME 31 to NME 3m performs supervisory control of the whole of the network system.

NME 31 to NME 3m are connected to routers 4 via the LANs. The routers 4 are connected to a management network ML for connecting the NMEs in the individual stations. The management network ML is realized as a DCC (Data Communication Channel) in the SOH (Section Over Head) in an SDH frame transmitted via, for example, the wavelength multiplex line FL.

In the embodiment, it is assumed that m = 7 and n = 32 and that the number of stations is 7 and each station is provided with 32 nodes.

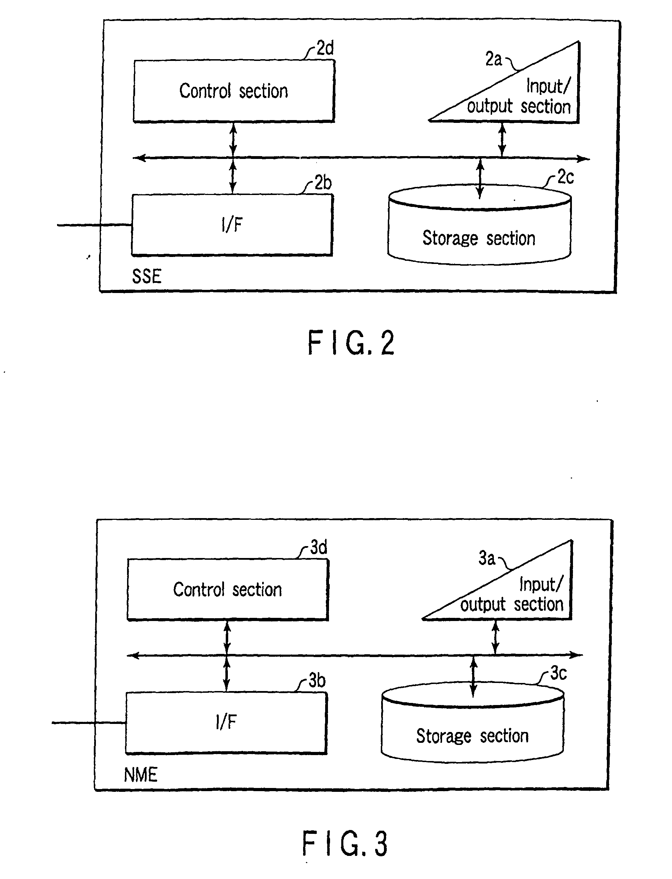

FIG. 2 is a diagram showing the configuration of SSE 21. Each of SSE 22 to SSE 2m has the same configuration. SSE 21 includes an input/output section 2a, an interface section (I/F) 2b, a storage section 2c, and a control section 2d. The input/output section 2a acts as a human-machine interface. The interface section (I/F) 2b, which is connected to a LAN, interfaces its equipment with the nodes 111 to 11n and NME 31. The storage section 2c stores various application programs executed under the control of the control section 2d and the notification sent from the nodes to be managed.

FIG. 3 is a diagram showing the configuration of NME 31. Each of NME 32 to NME 3m has the same configuration. NME 31 includes an input/output section 3a, an interface section (I/F) 3b, a storage section 3c, and a control section 3d. The input/output section 3d acts as a human-machine interface. The interface section (I/F) 3b, which is connected to a LAN, interfaces its equipment with SSE 21 and router 4. The storage section 3c stores various application programs executed under the control of the control section 3d and the notification sent from the nodes to be managed.

SSE 21 to SSE 2m and NME 31 to NME 3m are realized by installing special functions in, for example, a general-purpose workstation. The main part of the function of each of SSE 21 to SSE 2m and NME 31 to NME 3m is realized using software executed by the CPU (Central Processing Unit) of the control sections 2d, 3d according to the programs stored in, for example, the storage sections 2c, 3c.

Next, the operation of the above configuration will be explained.

### [Detouring process]

The procedure for the detouring process will be explained.

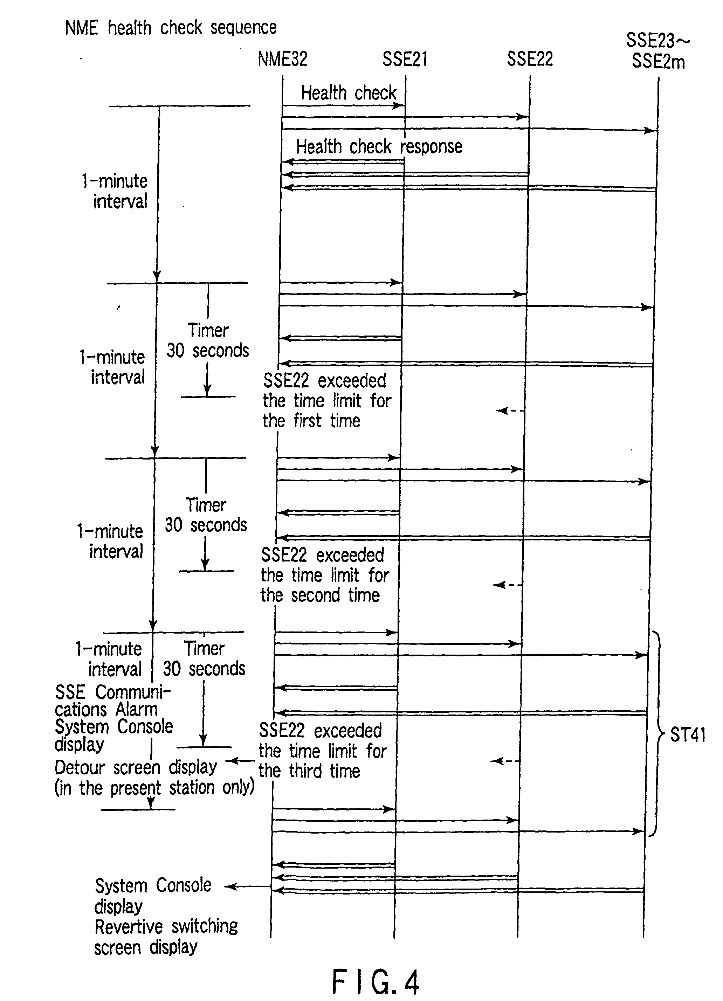

FIG. 4 is a sequence diagram to help explain a health check sequence to check the operating state of SSE. The sequence is the procedure for checking the state of the communication between the NME 31 to NME 3m and the SSE 21 to SSE 2m. The sequence is executed mainly by NME 31 to NME 3m.

The health check NME 31 running on SSE 21 to SSE 2m will be explained by reference to FIG. 4. NME 32 sends a health check request to SSE 21 to SSE 2m simultaneously every minute to inquire about their operating state. After receiving the health check request, the SSE returns a response to NME 32, when it is operating properly. NME 32 judges that the SSE that has given a response is in the proper state.

NME 32 expects to receive a response within 30 seconds after sending the health check request. If receiving no response within that time, NME 32 judges that an abnormality has occurred in the communication route with the SSE giving no response or that a fault has occurred in the SSE itself. To increase the reliability in sensing a fault, it is judged that an abnormality (NG) has occurred, only after there was no response three times in succession.

FIG. 4 shows a case where the response from SSE 22 exceeded the time limit three times in succession. In this case, NME 32 senses that a fault has occurred in the communication with SSE 22 (step ST41) and gives an alarm (SSE communications Alarm) indicating a fault in the communication with SSE 22.

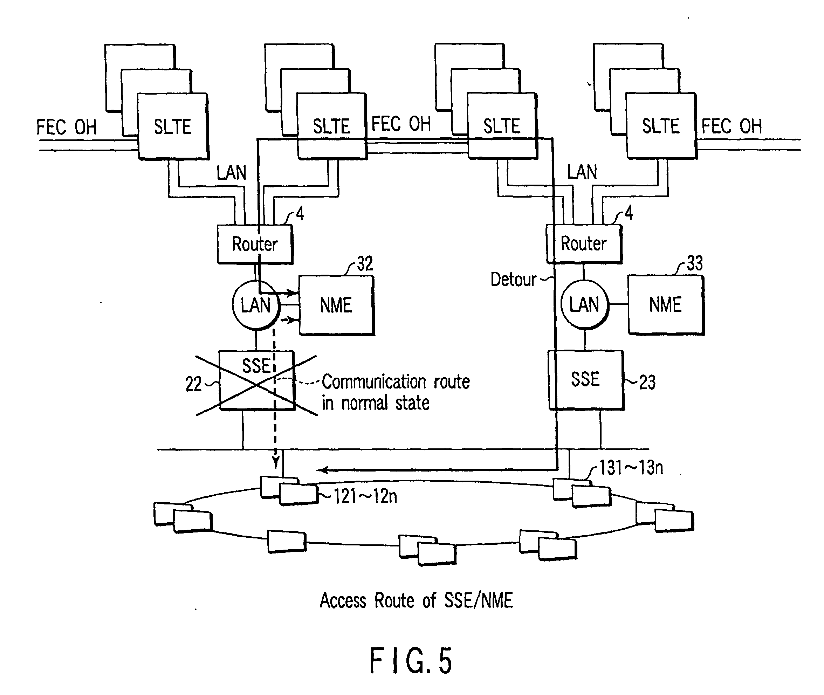

FIG. 5 is a diagram to help explain the process of setting an access route for going around the SSE in which a fault has occurred. When a fault has occurred in SSE 22, NME 32 accesses each of the nodes 121 to 12n of its station by way of the SSE in one other station without passing through SSE 22. The nodes 121 to 12n accessed inform NME 31 to NME 3m of the notification by way of the SSE in the one other station acting as a detour, not SSE 22. As a result, the access route between NME 32 and the nodes 121 to 12n is backed up.

In this system, the SSE belonging to the station adjacent (clockwise) to the WEST side of the station to which the faulty SSE belongs is selected as the detour SSE. Therefore, when a fault has occurred in SSE 22, SSE 23 is selected as a detour. Moreover, when a fault has occurred in SSE 23, SSE 24 is selected as a detour. That is, the SSE belonging to the station adjacent to the faulty SSE in a specific direction is selected as a detour. This enables a detour route at the occurrence of a fault to be determined uniquely, which is helpful in designing the system. Of course, SSE belonging to the station adjacent (counterclockwise) to the EAST side of the station to which the faulty SSE belongs may be selected as a detour.

The resetting of the access route is realized by rewriting the EFD (Event Forwarding Discriminator) of each node.

### [Workings of the detouring process]

The detouring process is carried out mainly by the NME. Which NME manages which SSE has been determined in each NME. It is assumed that only one NME manages control when viewed from the SSE.

When NME 31 to NME 3m sense an abnormality in the SSE to be managed, they carry out the detouring process. It is after the detouring process has been completed that the detour SSE can be accessed. For this reason, when the NME is disconnected from the network, or when the NME is down, the detouring process cannot be carried out.

The detour SSE stores the notification received from all the nodes provided in the faulty station (that is, the station to which the faulty SSE belongs) into the storage section 2c. The detour SSE informs all of the NME 31 to NME 3m of the notification excluding Scan Report received from each node.

The NME starts the detouring process using not only the Communications Alarm it senses but also an Equipment Alarm the SSE to be managed reports to it as a trigger. In that case, whether to start the detouring process automatically or according to the operator's instruction depends on the setting.

The Equipment Alarm is an alarm the SSE which has recognized its fault notifies to all the NMEs. Specifically, the SSE runs a health check on itself. If it has sensed an abnormality in the health check, it informs all the NMEs of the abnormality. Upon receiving an Equipment Alarm, the NME displays it on a window called the Notification Display, thereby informing the manager of the contents of the reception.

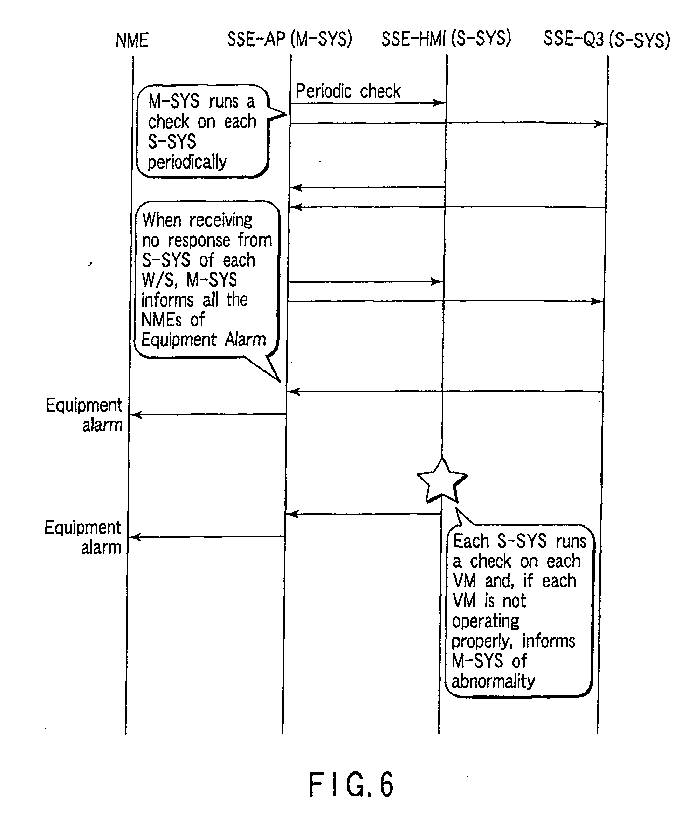

FIG. 6 is a diagram to help explain a health check sequence in which the SSE checks its own state. The SSE includes a plurality of W/S (workstations). In the SSE, the main W/S (master SSE) supervises the other W/Ss.

In FIG. 6, the master W/S is an SSE-AP (M-SYS: master system) and an SSE-HMI and an SSE-Q3 are subordinate W/Ss (S-SYS: slave systems). The SSE-AP is a W/S that supervises application programs. The SSE-HMI is a W/S that supervises human-machine interfaces. The SSE-Q3 is a W/S that supervises Q3 interfaces related to the management network ML.

An abnormality in the SSE means a state where the Master SSE cannot communicate with another W/S (workstation) or a fault (which is sensed in an S-SYS) in each VM (function module). Master SSE runs a health check on the other W/Ss. If sensing an abnormality in the health check, the Master SSE informs the NME of the abnormality.

Specifically, in FIG. 6, M-SYS runs a check on each S-SYS periodically. When receiving no response from the S-SYS of each W/S, M-SYS informs all the NMEs of Equipment Alarm.

Each S-SYS checks the operation of its VM (function module). If the VM is not operating properly, the S-SYS informs M-SYS of the improper operation. Receiving this, M-SYS informs all the NMEs of the Equipment Alarm.

A Communications Alarm is an alarm given by the NME when the NME has sensed an error in the communication with an SSE. The NME runs a health check on all the SSEs. The health check succeeds when the SSE makes a response to the access by the NME. If the SSE fails to give a response to the access by the NME (NG), the communication between the NME and SSE is considered to be abnormal. In this case, the NME displays "Communications Alarm" on the Notification Display.

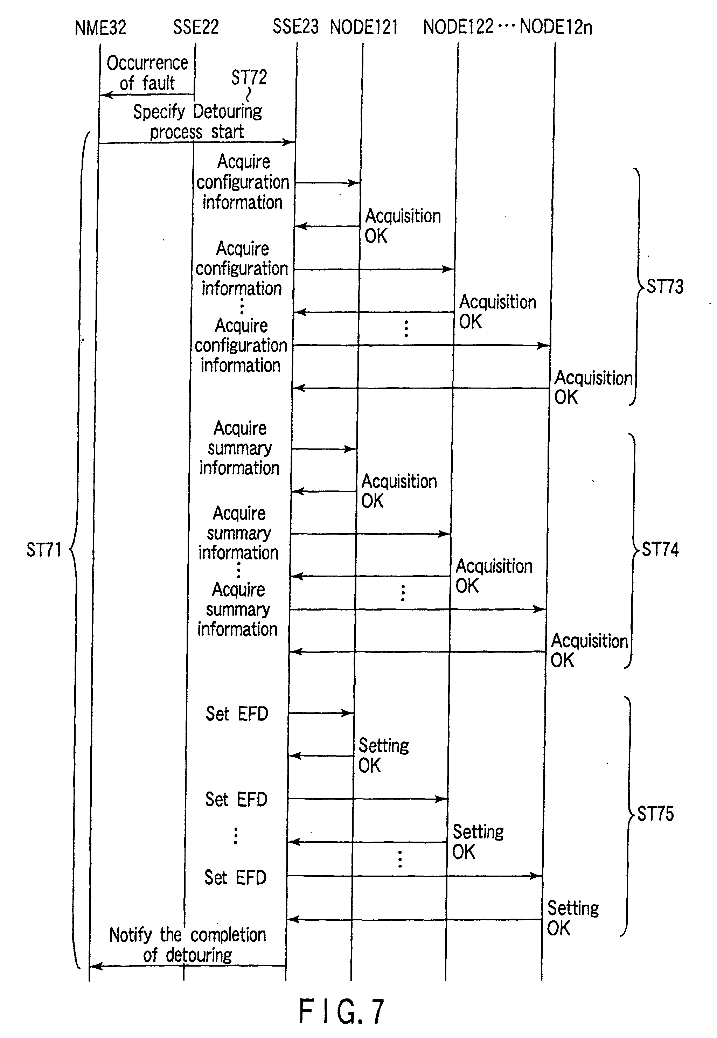

FIG. 7 is a diagram showing the sequence of a detouring process in the case of a fault in the SSE. The detouring process is divided roughly into five steps. These steps (step 71) include the step of specifying the start of the detouring process (ST72), the step of acquiring configuration information about all the nodes in the faulty station (ST73), the step of acquiring summary information (such as fault occurrence information) about all the nodes in the faulty station (ST74), the step of setting the EFDs of all the nodes in the faulty station (ST75), and the step of notifying the completion of the detouring.

In FIG. 7, when a fault has occurred in SSE 22 of its station (ST-2), NME 32 gives a detouring process starting instruction to SSE 23 of station ST-3 (ST72).

Receiving this, SSE 33 makes a configuration information acquiring request to the nodes 121 to 12n belonging to station ST-2. To meet the request, the nodes 121 to 12n return the responses including their configuration information to SSE 23 (ST73). The configuration information includes, for example, user label information, rack information, information about the board mounting state, and maintenance information.

SSE 23 receives the configuration information sent from each of the nodes 121 to 12n, thereby getting various pieces of notification from the nodes 121 to 12n, which enables management of them.

Next, SSE 23 makes a summary information acquiring request to the nodes 121 to 12n to manage alarms raised at the nodes 121 to 12n. To meet the request, each of the nodes 121 to 12n returns a response to SSE 23 (ST74). The summary information includes the latest alarm information.

Next, SSE 23 causes the nodes 121 to 12n to change the addressee of notification from SSE 22 to SSE 23. That is, SSE 23 sets an EFD in the nodes 121 to 12n to make itself an addressee (ST75).

After the above processes have been completed, SSE 23 informs all the NMEs including NME 32 that the detouring process has been completed. Receiving the information, NME 31 to NME 3n access the nodes 121 to 12n by way of SSE 23, not SSE 22, respectively.

If the SSE in the detour station is connected to the NME during the time from when the detouring process is started until it is completed, the detouring process is judged to have been completed, even when neither the acquisition of information on nodes nor the setting of EFD has been successful. In this case, too, the NME and nodes are accessed by way of the SSE in the detour station. If the setting of EFD has been unsuccessful, the operator has to operate the NME and set the EFD in the nodes manually. If the setting of the EFD is not done, the notification sent from the nodes is not notified to the detour SSE. As a result, the notification can be neither notified to the NME nor stored.

Between the NME and SSE, there is provided Machine-Machine Security for limiting the access between units. For the NME to manage the entire sequence, Machine-Machine Security between the managing NME and the detour SSE must be at Level 1 (the lowest level), otherwise the EFD setting in the detouring process cannot be performed (that is, the EFD setting process will be unsuccessful). In this case, it is necessary for the operator to set the EFD in the nodes manually after the level of Machine-Machine Security is changed to "1," as the need arises.

Specifically, the EFD is set as follows.

The addressees by Event Type are read from the nodes. As a result, the SSE in the faulty station is deleted from the addressees for the Event Type in which the address of the SSE in the faulty station has been set as an addressee. Instead, the detour SSE is set as an addressee. If the setting of the EFD cannot be read because of a refusal to read or the expiration of a time limit, an EFD resetting process is not performed. That is, the addressee of the notification is not changed to the SSE in the detour station.

When a fault has occurred in the detour SSE in the course of detouring to the SSE under the control of the NME, a SSE Alarm is displayed in the NME. However, even when a fault has occurred in the detour SSE in the middle of the detouring process, the NME does not perform control positively. When sensing Alarm from the detour SSE and recognizing it, the NME considers that the detouring process has failed and terminates the process. Thereafter, the NME accesses the nodes in the faulty station by way of the detour SSE.

When the SSE in which a fault occurred has been restored to its proper state in the middle of the detouring process, the health check returns to its normal state. This is sensed by the NME. At this time, the NME displays the "SSE Restoration Control Display" window on the screen. On the screen, the "Restoration button" "Restoration and DB Synchronizing button," and "No Restoration button" are displayed. These are made inactive to prevent a revertive switching process from being effected. At the time when the detouring process is completed, if the NME can communicate with the restored SSE, it makes the above buttons active, which enables the revertive switching process to be effected.

When a fault has occurred again in the SSE after the faulty SSE was restored to its proper state during the detouring process and the "SSE Restoration Control Display" window was displayed, the NME erases the "SSE Restoration Control Display" window.

After the detouring process has been completed, the notification from the nodes is notified to the NME by way of the SSE in the detour station. When the notification from the nodes in the faulty station is notified to the SSE of the detour station in the middle of the detouring process, the data is accumulated in the database in the SSE of the detour station (Log accumulation). The notification is also notified to the NME. During the time from when a fault occurred in the SSE until the detouring process has been completed, whether the notification from the nodes in the detour station is notified to the SSE in the faulty station or to the SSE in the detour station is undetermined.

To save the notification reported to the SSE of the faulty station (that is, to accumulate the notification in the database of the detour station), the SSE in the detour station has to perform a Log Record Get process on the nodes in the faulty station. In the time range to get a Log Record, Start Time is not specified and Current Time is specified as End Time. The reasons for this are as follows:
- It is because the SSE in the detour station cannot know when a fault occurred in the faulty SSE.
- It is because it is uncertain whether the NME grasps exactly the time that the fault occurred in the SSE.

There is a possibility that a fault in the SSE will occur while the NME is down. In addition, when a health check is run periodically, the time that a fault occurred might differ from the time at which an abnormality was sensed in the health check.

There is a strong possibility that the nodes contain Log Record full. As a result, when the SSE in the detour station tries to get Log Record as described above, the nodes that have received the Get request have to send all the Records about all the Events to the SSE in the detour station. For this reason, the nodes in the faulty station become busy sending the Records, which causes the problem of preventing the notification about other events occurred from being notified to the NME. The reason is that the nodes give priority to the process of responding to other units over the process of sending the notification.

For this reason, even when the detouring has been completed, a Log complementing process is not performed. Therefore, during the time from when a fault occurred until the detouring process has been completed, the notification might be lost even when the nodes have informed the SSE of the notification.

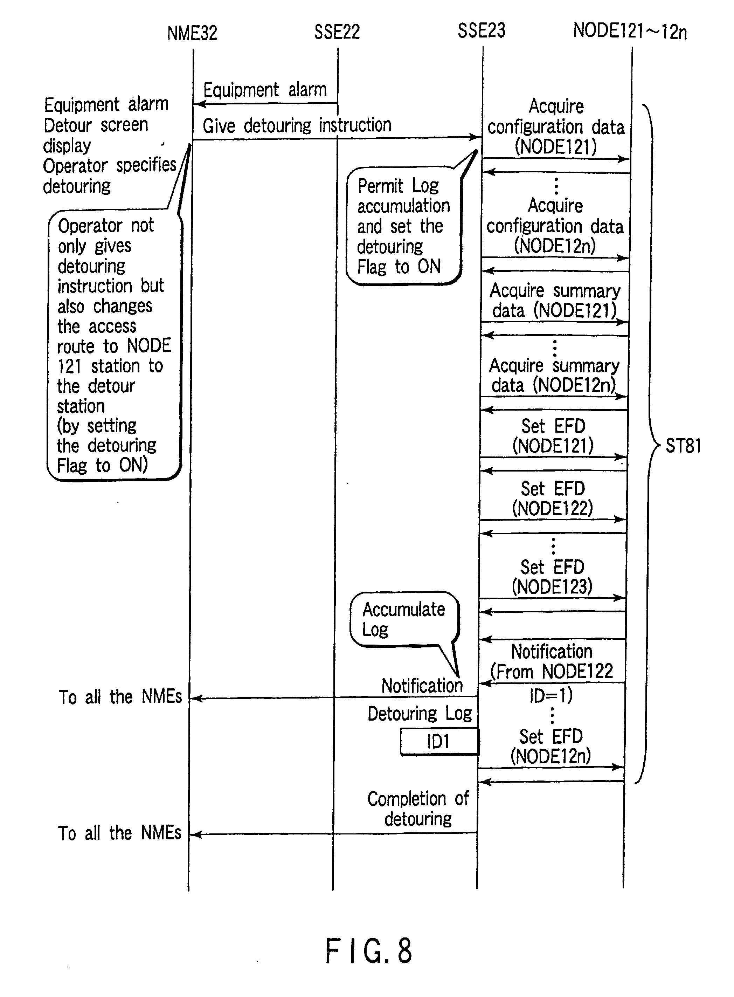

FIG. 8 is a diagram to help explain a Log accumulating process during the detouring process.

In FIG. 8, when receiving the notice of the occurrence of a fault from SSE 22, NME 32 sends a detour instruction to SSE 23. NME 32 shows that the access route to station ST-3 is detouring. "Detouring" is indicated by setting Flag ON. In response to this, SSE 23 not only starts to acquire the configuration information about the nodes 121 to 12n but also sets Log accumulation in the permit state and makes the detouring Flag ON.

When receiving the notification from a certain node (in FIG. 8, node 122) before EFD has been set in all of the nodes 121 to 12n, SSE 23 informs all the NMEs of the notification and accumulates it as Log. In FIG. 8, let the ID of detour Log be "1."

By the above procedure (ST81), SSE 23 in the detour station can start to carry out the process of accumulating the notification in the middle of the detouring process. That is, the notifications sent from the nodes 121 to 12n in the faulty station are accumulated in the SSE 23 of the detour station during the time from when the detouring process is completed until a revertive switching process explained later is completed. Furthermore, SSE 23 monitors whether the notifications sent from the nodes in the faulty station have losses. If SSE 23 has recognized losses, it reads the lost data from the relevant node and complements the Log database.

### [Revertive switching process]

Next, the revertive switching process performed when the communication with the SSE is restored will be explained. It is assumed that the fault in the SSE is remedied in the course of making a detour and the startup of the SSE is completed properly. In this system, when the NME has recognized in the health check that the SSE has been restored after the startup of the SSE, the revertive switching process is performed.

### [Workings of the revertive switching process]

The revertive switching process is performed mainly by the NME. Which NME manages which SSE depends on the setting in each NME. When the NME has sensed the restoration of the SSE and the operator has given an instruction, the revertive switching process is started. However, when the NME is disconnected, or when the NME is down, the revertive switching process is not carried out.

After being restored and started up, the SSE first acquires information about all the nodes in its station (including configuration information and summary information). When all the nodes have been scanned, regardless of whether the information can be acquired, the startup process of the SSE is completed. Then, receiving a health check request from the NME, the SSE returns a response. The response acts as a trigger for the revertive switching process.

Receiving the response, the NME recognizes that the SSE has recovered from the fault and displays the "SSE Restoration Control Display" window. Then, after checking the window, the operator gives an instruction to execute the revertive switching process, thereby starting the revertive switching process. When the NME has sensed at its startup that the detouring process is being performed, regardless of the presence of the response from the SSE of its station, the NME displays the "SSE Restoration Control Display" window that prompts the operator to effect revertive switching.

When recognizing the restoration of the SSE, the NME displays a message on the System Console. Although displaying the information on the SSE Alarm acting as a trigger in the "Notification Display" window in the detouring process, the NME displays restoration information acting as a trigger only on the System Console in the revertive switching process, not on the "Notification Display" window. Information indicating that the SSE has been restored is not accumulated in the Log.

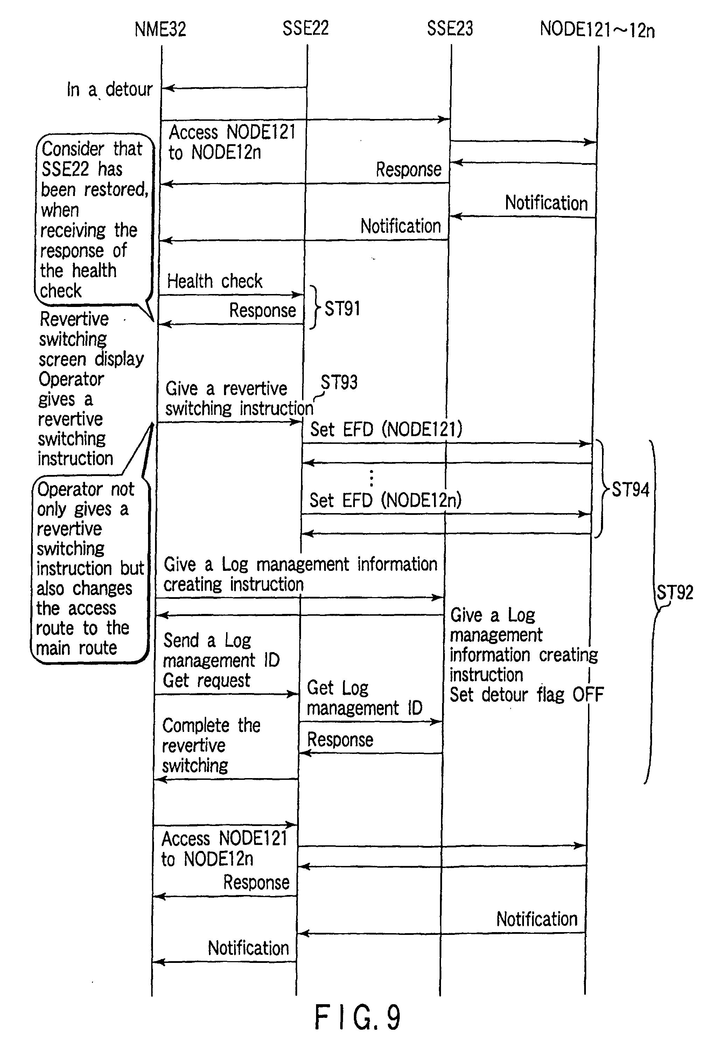

Next, the sequence of the revertive switching process will be explained by reference to FIG. 9.

The revertive switching process includes a step in which the restored SSE acquires configuration information about all the nodes in its station, a step in which the restored SSE acquires summary information about all the nodes in its station, a step in which the restored SSE sets the EFD in all the nodes in its station, a step in which the SSE in the detour station creates Log information, a step in which the SSE in the detour station transfers Log information to the restored SSE, and the step of notifying the completion of the revertive switching process.

When receiving the response of the health check, NME 32 considers that SSE 22 has been restored and displays a revertive switching screen that prompts the operator to give an instruction (ST91). When the operator has requested revertive switching, NME 32 not only gives a revertive switching instruction to SSE 22 (ST93) but also changes the access route to the main route.

Then, NME 32 changes the EFD of the nodes 121 to 12n from SSE 23 to SSE 22 (ST94) and thereafter instructs SSE 23 to create Log management information. SSE 23 sets the detour flag OFF and returns a response to NME 32.

Next, NME 32 sends a Log management ID acquiring request (Get) to SSE 22. Then, SSE 22 relays this request to SSE 23. Receiving the Log management ID acquiring request, SSE 23 returns the Log management information to SSE 22. After SSE 22 returns the Log management information given by the NME, the revertive switching process is completed.

In steps from the start to end of the revertive switching process (ST92), if the restored SSE is connected to the NME, the revertive switching process is completed even when neither the acquisition of information about the nodes nor the setting of EFD was successful. From this point on, accessing is done via the restored SSE.

If the EFD setting was unsuccessful, the operator has to operate the NME and set the EFD in the nodes manually. If the EFD has not been set, the notification after the revertive switching process will not be notified to the SSE in its station, and the notification is neither notified to the NME nor accumulated.

In FIG. 9, NME 32 sends a Log management information creating request to SSE 23 of the detour station. SSE 23 compresses a detour Log according to the request, thereby creating Log management information.

In the sequence of FIG. 9, the detouring Flag is kept ON until the "Log management ID Get" step has been reached. The completion of the revertive switching is notified to all the NMEs.

### [Database (DB) synchronizing process]

Next, the DB synchronizing process will be explained. The DB synchronizing process is the process of matching the Log accumulated in the SSE in the detour station with the database of the restored SSE. This process is carried out under the control of the NME after the completion of the revertive switching process.

The SSE in the detour station accumulates, as Log, the notification sent from the nodes in the faulty station until the revertive switching process is started. When the revertive switching process is started after the restoration of the SSE in the faulty station to the proper state, the Log accumulated during the detouring is transferred to the SSE restored. by the DB synchronizing process. This enables the restored SSE to secure the notification during the period of fault.

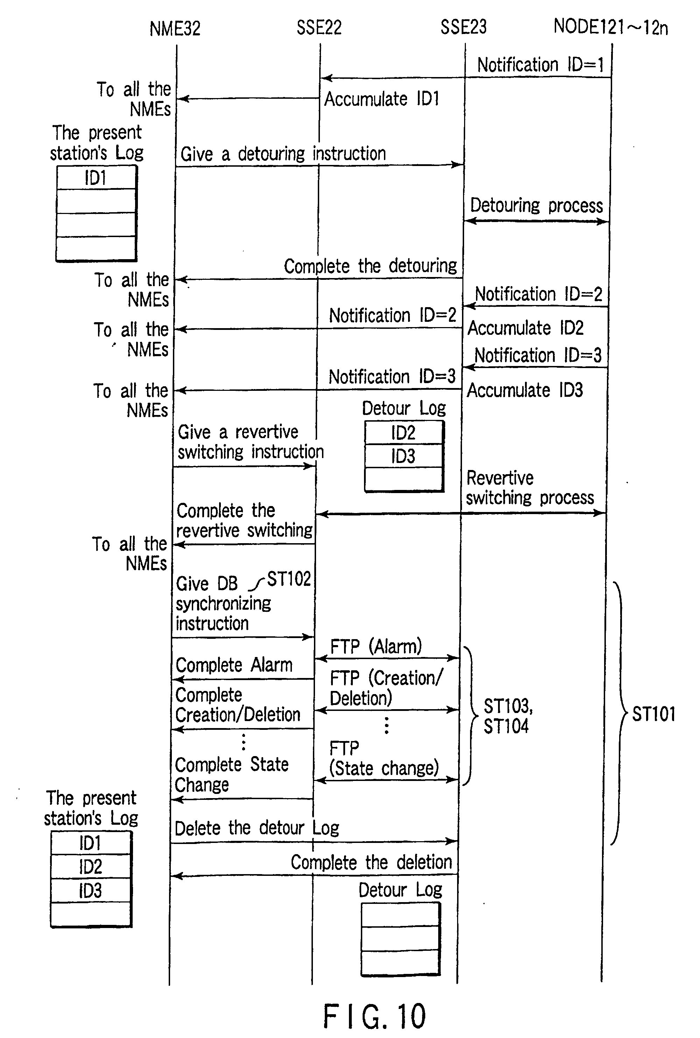

FIG. 10 is a diagram to help explain the sequence of the DB synchronizing process. The DB synchronizing process (ST101) includes a step in which the SSE in the detour station transfers files to the restored SSE in units of Log, a step in which the restored SSE expanded the transferred file, and the step of expanding the data in the expanded files over the database of the restored SSE.

In FIG. 10, the detour Log is accumulated in SSE 23 during the time from the detouring process to the start of the revertive switching process (ID2, ID3). After the revertive switching is completed and SSE 22 informs all the NMEs of the completion, NME 32 instructs SSE 22 to start the DB synchronizing process (ST102).

Receiving the instruction, SSE 22 requests SSE 23 of the detour station to transfer files using FTP (File Transfer Protocol). The transferred files include summary information for each item, such as Alarm or (Object) Creation/Deletion. After the file transfer for each item is completed properly, SSE 22 informs NME 32 of the completion of the file transfer. When the sequence up to the State Change (ST103, ST104) has been completed, NME 32 instructs SSE 23 to delete the detouring Log from the database. Then, NME 32 receives a notice of the completion of the deletion from SSE 23, which completes the DB synchronizing process.

Taking into account a case where the file transfer fails in the middle, the data in the database in the detour station is not deleted until the file transfer is completed. Therefore, even if the file transfer fails in the middle, the data can be complimented by trying DB synchronization again. The transferred files are the compressed files of the individual Logs.

To summarize the above sequence, the Log management information is first created in the SSE of the detour station according to the Log management information creating instruction. Next, the SSE in the detour station compresses each Log file. Then, the compressed files are transferred to the restored SSE after the revertive switching process.

As described above, in the first embodiment, when the NME cannot communicate properly with the SSE in its station, it gives a detouring process start instruction to the SSE in an adjacent station. In response to the instruction, the SSE in the adjacent station requests the nodes in the faulty station to send the configuration information and summary information and rewrite the EFD. This causes supervisory control of the nodes in the faulty station to be handed over to the SSE in the adjacent station.

In a conventional system, when a fault has occurred in the SSE, the communication between the nodes in the station to which the SSE belongs and the NME is cut off. As a result, the NME cannot perform supervisory control of the station. This introduces the danger that the supervisory control function for the whole network will be out of order. For this reason, suitable measures have been desired.

In contrast, with the first embodiment, even if a fault has occurred in the SSE, supervisory control of the nodes in the faulty station is handed over to another SSE. This eliminates the danger that the supervisory control function for the whole network will be out of order, even if a fault occurs in the SSE.

In the first embodiment, when the SSE has been recovered from the faulty state, the NME senses this and requires the restored SSE to rewrite the EFD of the nodes belonging to the same station and thereafter carries out the revertive switching process. Furthermore, the SSE in the detour station accumulates the notification sent from each node as Logs and transfers them to the restored SSE in the DB synchronizing process. This enables the supervisory control process to be handed over to the restored SSE after the restoration of the SSE.

For the reason stated above, it is possible to provide a method of controlling an information transmission network system which eliminates the danger of impairing the supervisory control function, even when a fault has occurred in the SSE.

### (Second Embodiment)

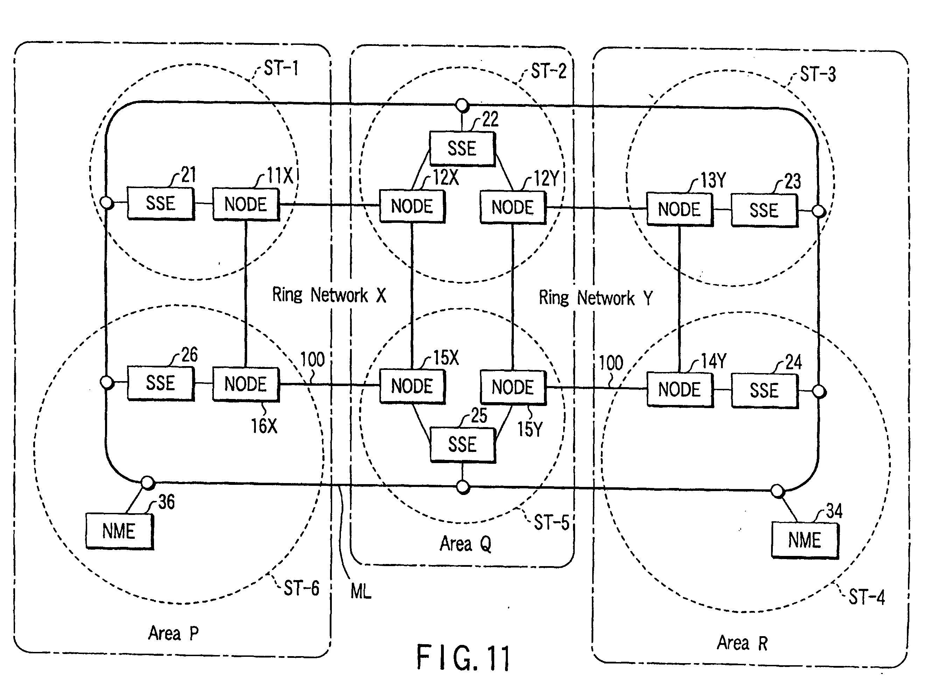

A second embodiment of the present invention will be explained. FIG. 11 is a diagram showing the configuration of an information transmission network system according to a second embodiment of the present invention. In FIG. 11, the same parts as those in FIG. 1 are indicated by the same reference numerals.

The system of FIG. 11 includes a ring network X and a ring network Y. The ring network X includes node 11X, node 12X, node 15X, and node 16X. The ring network Y includes node 12Y, node 13Y, node 14Y, and node 15Y. The nodes belonging to each ring network are connected to each other via a communication line 100.

Each node is provided in any one of station ST-1 to station ST-6. Node 11X is provided in station ST-1. Node 12X and node 12Y are provided in station ST-2. Node 13Y is provided in station ST-3. Node 14Y is provided in station ST-4. Node 15X and node 15Y are provided in station ST-5. Node 16X is provided in station ST-6.

SSE 21 to SSE 26 are provided in station ST-1 to ST-6, respectively. Each of SSE 21 to SSE 26 is connected to the nodes belonging to the same station. SSE 21 to SSE 26 are connected to each other via a management network ML.

To the management network ML, NME 34 and NME 36 are connected. NME 34 is provided in station ST-4. NME 36 is provided in station ST-6.

Station ST-1 and station ST-6 are provided in area P. Station ST-2 and station ST-5 are provided in area Q. Station ST-3 and station ST-4 are provided in area R. Each area is, for example, a country. That is, although the stations belonging to the same area are relatively close to each other, the stations belonging to an area may be located a long distance away from the stations belonging to a different area. If area Q is far away from area R, the distance between node 12Y and node 13Y or between node 14Y and node 15Y may amount to, for example, hundreds of kilometers. It is possible for such a situation to occur often in submarine optical cable systems.

The above configuration is characterized in that NMEs are provided in only some of the stations (that is, station ST-4 and station ST-6 in FIG. 11) and no NME is provided in the remaining stations. That is, since the number of NMEs differs from the number of SSEs, the SSEs and the NMEs are not in a one-to-one ratio. For this reason, when a fault has occurred, which NME gives a detouring process start instruction to which SSE becomes a problem.

In the second embodiment, an NME acting as a master and a NME acting as a slave have been determined beforehand. The way of assigning the master and slave may not be fixed. For example, NME 34 may change the roles of master and slave with NME 36 at intervals of 24 hours. In short, at least one master NME is caused to always exist in a network. In the second embodiment, NME 34 is made a master and NME 36 a slave.

In the first embodiment, the communication route between the nodes and the NMEs has been detoured through the SSE belonging to the station adjacent clockwise to the faulty SSE. However, in a system as shown in FIG. 11, it is convenient not to determine the position of the SSE in the detour station uniquely.

In the system of FIG. 11, when a fault has occurred in SSE 23, the SSE in the detour station is SSE 24 in the first embodiment. Similarly, when a fault has occurred in SSE 24, the SSE in the detour station is SSE 25 in the first embodiment.

However, there may be a case where station ST-4 is located a very long distance away from station ST-5. For this reason, if the notification that node 14 Y notifies to NME 34 goes by way of SSE 25, this would be undesirable because of transmission delay.

To overcome this disadvantage, the SSE located close to the faulty SSE is selected as the SSE in the detour station in the second embodiment. For instance, an SSE belonging to the same area is selected as the SSE in the detour station. That is, the detouring location when SSE 23 has failed is set as SSE 24. The detouring location when SSE 24 has failed is set as SSE 23, not SSE 25. Similarly, SSE 22 and SSE 25 are set as detouring locations when either has failed. In addition, SSE 21 and SSE 26 are set as detouring locations when either has failed.

Doing this, the transmission delay can be minimized, enabling the important information to be transmitted to the NME without delay.

When a fault has occurred in a certain SSE, which SSE is set as the detouring location is determined by the NME of the master. The NME of the master has stored a database which causes the SSEs in the detouring locations to correspond to the individual SSEs. When sensing a fault in the SSE, the NME of the master refers to the database and gives a detouring process start instruction to the SSE in the detouring location. This makes it possible to carry out the detouring process smoothly.

## Claims

1. A method of controlling an information transmission network system comprising a network of stations (ST-1 to ST-m) each including node units (111 to 1mn) connected to said network, and first network management equipment (21 to 2m) connected to the node units belonging to the same station, said network being also provided with second network management equipment (31 to 3m) for performing supervisory control of the node units and information communication with the node units by way of said first network management equipment, and said method includes a fault sensing step (ST41) of sensing the occurrence of a fault in said first network management equipment of one station, **characterised by** comprising:
a step (ST72) in which the second network management equipment of a station that has sensed said fault, gives a detouring process start instruction to the first network management equipment of one other station,
a step (ST73) in which the first network management equipment of said one other station that has received said detouring process start instruction acquires configuration information about the node units of the faulty station,
a step (ST74) in which the first network management equipment of said one other station acquires summary information about the node units of the faulty station,
a step (ST75) in which the first network management equipment of said one other station sets the addressee of the notification sent from the node units of the faulty station to be itself, and
a Log accumulating step (ST81) of accumulating the notifications sent from said node units as Logs in said first network management equipment.

2. The method according to claim 1, **characterized in that** said configuration information includes at least one of user label information about the node units, rack information, information about the board mounting state, and maintenance information.

3. The method according to claim 1, **characterized by** further comprising:
a restoration sensing step (ST91) whereby the recovery of said first network management equipment from the fault is detected; and
a revertive switching step (ST92) whereby, when the recovery from the fault has been detected in the preceding step, the information communication route between said second network management equipment and the node units of the station to which the restored first network management equipment belongs, is reverted from the route passing through the first network management equipment of the one other station, to the route passing through the restored first network management equipment.

4. The method according to claim 3, **characterized in that** the said revertive switching step (ST92) includes
a step (ST93) in which the second network management equipment that has detected the restoration of said first network management equipment gives a revertive switching instruction to the restored first network management equipment, and
a step (ST94) in which the first network management equipment that has received the revertive switching instruction changes the addressee of the notification sent from the node units belonging to the same station from the first network management equipment of said one other station to itself in its resetting.

5. The method according to daim 4, **characterized by** further comprising:
a matching step (ST101) of matching the Log stored in said restored first network management equipment with the Log stored in the first network management equipment in said one other station after said revertive switching step (ST92) has been completed.

6. The method according to daim 5, **characterized in that** said matching step includes
a step (ST102) in which the second network management equipment that has sensed the completion of said revertive switching step (ST92) gives a database matching instruction to said restored first network management equipment,
a step (ST103) in which the first network management equipment that has received the database matching instruction requests the first network management equipment in said one other station to transfer the notification accumulated as said Logs, and
a step (ST104) in which the first network management equipment that has received the request transfers the notification accumulated as said Logs to the requesting first network management equipment.

## Patentansprüche

1. Verfahren zum Steuern eines Informationsübertragungsnetzwerksystems mit einem Netzwerk von Stationen (ST-1 bis ST-m), die jeweils mit dem Netzwerk verbundene Knoteneinheiten (111 bis 1mn) aufweisen, und ersten Netzwerkmanagementeinrichtungen (21 bis 2m), die mit den zur selben Station gehörenden Knotenpunkten verbunden sind, wobei das Netzwerk ferner mit zweiten Netzwerkmanagementeinrichtungen (31 bis 3m) zum Durchführen einer Überwachungssteuerung der Knoteneinheiten und zur Informationskommunikation mit den Knoteneinheiten mittels der ersten Netzwerkmanagementeinrichtungen versehen ist, und wobei das Verfahren einen Fehlererkennungsschritt (ST41) umfaßt, in dem das Auftreten eines Fehlers in den ersten Netzwerkmanagementeinrichtungen einer Station erkannt wird, **dadurch gekennzeichnet, daß** das Verfahren die folgenden Schritte umfaßt:
einen Schritt (ST72), in dem die zweite Netzwerkmanagementeinrichtung einer Station, welche den Fehler erkannt hat, einen Umleitungsvorgangsstartbefehl an die erste Netzwerkmanagementeinrichtung einer anderen Station ausgibt,
einen Schritt (ST73), in dem die erste Netzwerkmanagementeinrichtung der einen anderen Station, welche den Umleitungsvorgangsstartbefehl empfangen hat, Konfigurationsinformationen über die Knoteneinheiten der fehlerhaften Station ermittelt,
einen Schritt (ST74), in dem die erste Netzwerkmanagementeinrichtung der einen anderen Station summarische Informationen über die Knoteneinheiten der fehlerhaften Station ermittelt,
einen Schritt (ST75), in dem die erste Netzwerkmanagementeinheit der einen anderen Station sich selbst als den Adressaten der von den Knoteneinheiten der fehlerhaften Station gesendeten Benachrichtigung einsetzt, und
einen Log-Akkumulationsschritt (ST81) des Akkumulierens der von den Knoteneinheiten gesendeten Benachrichtigungen als Logs in der ersten Netzwerkmanagementeinrichtung.

2. Verfahren nach Anspruch 1, **dadurch gekennzeichnet, daß** die Konfigurationsinformationen mindestens eine der folgenden Informationen umfassen: Benutzerlabelinformationen über die Knoteneinheiten, Rack-Informationen, Informationen über die Platinenbestückung und Wartungsinformationen.

3. Verfahren nach Anspruch 1, **dadurch gekennzeichnet, daß** es ferner umfaßt:
einen Wiederherstellungserkennungsschritt (ST91), durch welchen die Behebung des Fehlers der ersten Netzwerkmanagementeinrichtung erkannt wird; und
einen Rückschaltschritt (ST92), durch welchen, wenn die Behebung des Fehlers im vorhergehenden Schritt erkannt wurde, der Informationsübertragungsweg zwischen der zweiten Netzwerkmanagementeinrichtung und den Knoteneinheiten der Station, zu welcher die wiederhergestellte erste Netzwerkmanagementeinrichtung gehört, von dem durch die erste Netzwerkmanagementeinrichtung der einen anderen Station führenden Weg auf den durch die wiederhergestellte erste Netzwerkmanagementeinrichtung zurückgeschaltet wird.

4. Verfahren nach Anspruch 3, **dadurch gekennzeichnet, daß** der Rückschaltschritt (ST92) umfaßt:
einen Schritt (ST93), in dem die zweite Netzwerkmanagementeinrichtung, welche die Wiederherstellung der ersten Netzwerkmanagementeinrichtung erkannt hat, einen Rückschaltbefehl an die wiederhergestellte erste Netzwerkmanagementeinrichtung ausgibt, und
einen Schritt (ST94), in dem die erste Netzwerkmanagementeinrichtung, welche den Rückschaltbefehl erhalten hat, während ihres Rücksetzens den Adressaten der Benachrichtigung ändert, die von den zu der selben Station gehörenden Knoteneinheiten von der ersten Netzwerkmanagementeinrichtung der einen anderen Station an sich selbst gesendet wurde.

5. Verfahren nach Anspruch 4, **dadurch gekennzeichnet, daß** es ferner aufweist:
einen Abgleichschritt (ST101) zum Abgleichen des in der wiederhergestellten ersten Netzwerkmanagementeinrichtung gespeicherten Logs mit dem in der ersten Netzwerkmanagementeinrichtung der einen anderen Station gespeicherten Log nach dem Abschluß des Rückschaltschritts (ST92).

6. Verfahren nach Anspruch 5, **dadurch gekennzeichnet, daß** der Abgleichschritt umfaßt:
einen Schritt (ST102), in dem die zweite Netzwerkmanagementeinrichtung, welche den Abschluß des Rückschaltschritts (ST92) erkannt hat, einen Datenbankabgleichbefehl an die wiederhergestellte erste Netzwerkmanagementeinrichtung ausgibt;
einen Schritt (ST103), in dem die erste Netzwerkmanagementeinrichtung, welche den Datenbankabgleichbefehl empfangen hat, die erste Netzwerkmanagementeinrichtung der einen anderen Station auffordert, die als die Logs akkumulierten Benachrichtigungen zu übertragen, und
einen Schritt (ST104), in dem die erste Netzwerkmanagementeinrichtung, welche die Anforderung empfangen hat, die als die Logs akkumulierten Benachrichtigungen an die anfordernde erste Netzwerkmanagementeinrichtung überträgt.

## Revendications

1. Procédé de commande d'un système de réseau de transmission d'informations comprenant un réseau de stations (ST-1 à ST-m) chacune comprenant des unités de noeud (111 à 1mn) raccordée audit réseau, et un premier équipement de gestion de réseau (21 à 2m) raccordé aux unités de noeud appartenant à la même station, ledit réseau étant aussi pourvu d'un second équipement de gestion de réseau (31 à 3m) pour réaliser une commande de supervision des unités de noeud et une communication d'informations avec les unités de noeud au moyen dudit premier équipement de gestion de réseau, et ledit procédé comprenant une étape de détection de panne (ST41) détectant l'occurrence d'une panne dans ledit premier équipement de gestion de réseau d'une station, **caractérisé en ce qu'**il comprend :
une étape (ST72) dans laquelle le second équipement de gestion de réseau d'une station qui a détecté ladite panne, donne une instruction de démarrage de traitement de détournement au premier équipement de gestion de réseau d'une autre station ;
une étape (ST73) dans laquelle le premier équipement de gestion de réseau d'une dite autre station qui a reçu ladite instruction de démarrage de traitement de détournement acquiert des informations de configuration concernant les unités de noeud de la station en panne ;
une étape (ST74) dans laquelle le premier équipement de gestion de réseau d'une dite autre station acquiert des informations de résumé concernant les unités de noeud de la station en panne ;
une étape (ST75) dans laquelle le premier équipement de gestion de réseau d'une dite autre station change le destinataire de la notification envoyée par les unités de noeud de la station en panne pour lui-même ; et
une étape d'accumulation de relevé (ST81) accumulant les notifications envoyées par lesdites unités de noeud en tant que relevés dans ledit premier équipement de gestion de réseau.

2. Procédé selon la revendication 1, **caractérisé en ce que** lesdites informations de configuration comprennent au moins l'une des informations d'étiquette d'utilisateur concernant les unités de noeud, des informations de châssis, des informations concernant l'état de montage de carte, et des informations de maintenance.

3. Procédé selon la revendication 1, **caractérisée en ce qu'**il comprend en outre :
une étape de détection de restauration (ST91) par laquelle la récupération de la panne dudit premier équipement de gestion de réseau est détectée ; et
une étape de commutation de retour (ST92) par laquelle, lorsque la récupération de la panne a été détectée à l'étape précédente, la route de communication d'informations entre ledit second équipement de gestion de réseau et les unités de noeud de la station à laquelle le premier équipement de gestion de réseau restauré appartient, est retournée de la route passant à travers le premier équipement de gestion de réseau à une autre station, à la route passant à travers le premier équipement de gestion de réseau restauré.

4. Procédé selon la revendication 3, **caractérisé en ce que** ladite étape de commutation de retour (ST92) , comprend :
une étape (ST93) dans laquelle le second équipement de gestion de réseau qui a détecté la restauration dudit premier équipement de gestion de réseau donne une instruction de commutation de retour au premier équipement de gestion de réseau restauré ; et
une étape (ST94) dans laquelle le premier équipement de gestion de réseau qui a reçu l'instruction de commutation de retour change le destinataire de la notification envoyée par les unités de noeud appartenant à la même station du premier équipement de gestion de réseau à ladite autre station pour lui-même pendant sa réinitialisation.

5. Procédé selon la revendication 4, caractérisé en qu'il comprend en outre :
une étape d'adaptation (ST101) adaptant le relevé stocké dans ledit premier équipement de gestion de réseau restauré avec le relevé stocké dans le premier équipement de gestion de réseau dans une dite autre station après que ladite étape de commutation de retour (ST92) soit terminée.

6. Procédé selon la revendication 5, **caractérisé en ce que** ladite étape d'adaptation comprend :
une étape (ST102) dans laquelle le second équipement de gestion de réseau qui a détecté la fin de ladite étape de commutation de retour (ST92) donne une instruction d'adaptation de base de données audit premier équipement de gestion de réseau restauré ;
une étape (ST103) dans laquelle le premier équipement de gestion de réseau qui a reçu l'instruction d'adaptation de base de données demande au premier équipement de gestion de réseau dans une dite autre station de transférer la notification accumulée en tant que dit relevés ; et
une étape (ST104) dans laquelle le premier équipement de gestion de réseau qui a reçu la demande transfère la notification accumulée en tant que dits relevés au premier équipement de gestion de réseau demandeur.
